# EUROPÄISCHE PATENTSCHRIFT

(11) **EP 1 029 712 B1**
(45) Veröffentlichungstag und Bekanntmachung des Hinweises auf die Patenterteilung: **06.05.2004**
(21) Anmeldenummer: 99103341.6
(22) Anmeldetag: 20.02.1999
(51) Int. Cl.: B60C 11/03, B60C 19/00

(54) **Fahrzeugluftreifen**
Vehicle tyre
Bandage pneumatique pour véhicule

(43) Veröffentlichungstag der Anmeldung: 23.08.2000
(73) Patentinhaber: Continental Aktiengesellschaft, 30165 Hannover (DE)
(72) Erfinder: Baumhöfer, Johannes Josef, 30900 Wedemark (DE); Wies, Burkhard, 30455 Hannover (DE); Jansen, Michael, 52525 Waldfeucht-Haaren (DE)

(56) Entgegenhaltungen:
- EP-A- 0 565 270
- EP-A- 0 718 124
- EP-A- 0 857 588
- EP-A- 0 890 456
- DE-A- 19 722 572
- US-A- 5 323 824
- PATENT ABSTRACTS OF JAPAN vol. 012, no. 321 (M-736), 31. August 1988 (1988-08-31) & JP 63 090404 A (BRIDGESTONE CORP), 21. April 1988 (1988-04-21)

## Beschreibung

Die gegenständliche Erfindung betrifft einen Fahrzeugluftreifen mit einem bezüglich des Umfanges der Lauffläche asymmetrisch gestalteten Laufstreifenprofil, welches somit fahrzeugbezogen einen Außen- und einen Innenbereich, jeweils mit einer Schulterblockreihe, und einen Mittelbereich aufweist, welcher durch zum Außen- bzw. Innenbereich gehörende Umfangsnuten seitlich begrenzt ist, wobei sich Quernuten aus der Schulterblockreihe des Innenbereiches bis in den Mittelbereich fortsetzen.

Aus dem Stand der Technik sind bereits unterschiedliche Ausführungsformen von Reifen mit asymmetrisch gestalteten Laufstreifenprofilen bekannt. Asymmetrisch gestaltete Laufstreifenprofile sind dabei grundsätzlich solche, die, bezogen auf das Fahrzeug, einen Innenbereich und einen Außenbereich besitzen, wo Profilstrukturen vorgesehen werden, die sich voneinander grundsätzlich unterscheiden. Gerade mit einer solchen Profilausgestaltung ist es nämlich möglich, gezielt auf bestimmte Reifeneigenschaften Einfluss zu nehmen und diese zu optimieren, beispielsweise das Drainagevermögen, das Fahrverhalten und auch das sich beim Abrollen des Reifens bildende Reifen/Fahrbahngeräusch.

Ein als Ganzjahresreifen ausgebildeter Fahrzeugluftreifen mit allen Merkmalen des Oberbegriffs des Patentanspruchs 1 ist aus der EP 0 890 456 A2 bekannt.

Ein Fahrzeugluftreifen der eingangs genannten Art, der jedoch gleichzeitig auch drehrichtungsgebunden gestaltet ist, ist aus der EP-A 0 718 124 bekannt. Hier wird ein funktionsgetrennt optimiertes Laufstreifenprofil vorgeschlagen, bei dem im Außenbereich über eine Breite von 30 bis 40 % der Laufstreifenbreite der Fahrflächenanteil (Positivanteil) mindestens 75 % beträgt. Im Innenbereich zwischen Laufstreifenrand und Umfangsmittellinie beträgt der Fahrflächenanteil 55 bis 65 %. Im Mittelbereich des Laufstreifens ist ein in Umfangsrichtung durchgehendes Laufstreifenband angeordnet, welches entlang der Mittelumfangslinie verläuft und durch Sacknuten strukturiert ist, die quasi in Fortsetzung sämtlicher Quernuten aus der Schulterblockreihe des Außenbereiches verlaufen. Diese im Laufstreifenmittelbereich vorgesehenen Profilstrukturen sind beidseitig durch je eine breite und in Umfangsrichtung gerade umlaufende Umfangsnut begrenzt. Reifen mit diesem bekannten Laufstreifenprofil besitzen gute Fahreigenschaften und ein gutes Wasserableitvermögen, auch bei höheren Geschwindigkeiten.

Fahreigenschaften und ein gutes Wasserableitvermögen, auch bei höheren Geschwindigkeiten.

Aus der DE-A1 38 34 383 ist ein Fahrzeugluftreifen mit einem drehrichtungsgebunden gestalteten Laufstreifenprofil bekannt, welches, im Sinne obiger Erläuterungen, nicht asymmetrisch gestaltet ist. Zur Verbesserung des Drainagevermögens, also zur Verbesserung des Aquaplaningverhaltens, und zur Beeinflussung bzw. Verbesserung der Geräuschentwicklung wird dieses Laufstreifenprofil so ausgeführt, dass es sich im Wesentlichen nur aus einer Vielzahl von schräg orientierten, spitzwinkelig zur Reifenumfangsmittellinie verlaufenden Rippenprofilelementen zusammensetzt. Die Profilrillen, durch die diese Rippenprofilelemente entstehen, beginnen im Bereich der Reifenumfangsmittellinie und schließen dort einen Winkel mit der Mittellinie von 15 bis 30° ein. In den Schulterbereichen besitzen die Profilrillen Knickstellen, so dass dort der Winkel, den die Rillen mit der Reifenumfangsmittellinie einschließen, wesentlich größer ist. In den Reifenschulterbereichen sind zusätzlich zwischen den bereits abgeknickten Abschnitten der Profilrillen zu diesen parallel verlaufende Zusatzprofilrillen angeordnet. Mit einem derartigen Laufstreifenprofil lässt sich zwar das Drainagevermögen verbessern, die über einen Großteil der Laufstreifenbreite vorliegenden spitzwinkelig zur Reifenumfangsmittellinie verlaufenden Rippenprofilelemente sind jedoch, bezogen auf ihre Länge, derart schmal, dass bei Reifen mit einer derartigen Profilgestaltung einerseits ein ungleichmäßiger Abrieb und andererseits auch, entgegen der in dieser Schrift geäußerten Annahme, eine eher ungünstige Geräuschentwicklung auftreten würden.

Die Erfindung hat sich nun die Aufgabe gestellt, ein asymmetrisch gestaltetes Laufstreifenprofil der eingangs genannten Art bezüglich seines Drainagevermögens zu verbessern und hinsichtlich des Abrollgeräusches günstig zu beeinflussen. Dies soll unter Bedachtnahme auf ein möglichst gleichmäßig Abriebsbild des Laufstreifens erfolgen.

Gelöst wird die gestellte Aufgabe erfindungsgemäß dadurch, dass der Mittelbereich des Laufstreifenprofils eine Breite von 25 bis 35 % der Laufstreifenbreite aufweist, wobei sich höchstens jede zweite Quernut aus der Schulterblockreihe des Innenbereiches im Mittelbereich als diesen zumindest nahezu durchquerende Nut fortsetzt, wobei diese Nuten im Mittelbereich über zumindest ein Drittel ihrer Längserstreckung einen Winkel von höchstens 30° mit der Äquatorlinie einschließen.

Erfindungsgemäß gestaltete Laufstreifenprofile bieten daher den Vorteil, dass im Mittelbereich des Laufstreifens das Drainagevermögen des Laufstreifenprofils zum Innenbereich zu, was bekannterweise von vorrangiger Bedeutung ist, durch die den Mittelbereich zumindest nahezu durchquerende Nuten deutlich verbessert ist. Da nicht jede der Quernuten aus der Schulterblockreihe eine derartige Fortsetzung im Mittelbereich findet, wird das Entstehen von zu schmalen Profilpositiven im Mittelbereich bei der vorgesehenen spitzwinkeligen Ausführung der Nuten vermieden. Diese Maßnahme ist nun nicht nur für den Laufstreifenabrieb günstig, sondern insbesondere auch für das entstehende Rollgeräusch. Es werden nämlich im Mittelbereich im Einlauf abrupte Aufschläge und im Auslauf unerwünschte Schwingungen vermieden. Darüber hinaus entstehen im Laufstreifenmittelbereich durch die verbleibenden Restimpulse nur Frequenzen mit halber Tonhöhe im Vergleich zu den Impulsen aus der Schulter, so dass sich eine für das menschliche Hörempfinden angenehme Mischfrequenz einstellt.

Je nach dem Verlauf der Nuten im Mittelbereich des Laufstreifens können Ausführungsformen der Erfindung so gestaltet werden, dass nur jede dritte oder jede vierte Quernut aus der Schulterblockreihe des Innenbereiches im Mittelbereich als diesen zumindest nahezu durchquerende Nut fortgesetzt wird.

Bei erfindungsgemäß gestalteten Laufstreifenprofilen ist es daher möglich, die Nuten im Mittelbereich relativ spitzwinkelig zur Umfangsrichtung des Reifens auszurichten. Bevorzugt ist dabei eine Ausführungsform, bei der diese Nuten an ihren beim Außenbereich liegenden Endbereichen einen Winkel ≤ 20° mit der Äquatorlinie einschließen.

Für die Steifigkeit des Laufstreifenprofils und damit das Abriebsbild und das Fahrverhalten ist es von Vorteil, wenn die Nuten des Mittelbereiches in einem Abstand, welcher höchstens 10 % der Laufstreifenbreite, insbesondere höchstens 5% der Laufstreifenbreite, beträgt, vor der den Mittelbereich begrenzenden Umfangsnut des Außenbereiches enden.

Zu der den Mittelbereich im Innenbereich begrenzenden Umfangsnut wird der Winkel, den die Nuten mit der Umfangsrichtung einschließen, größer. Dieser Winkel wird so gewählt, dass er zwischen 30 und 65°, insbesondere höchstens 50°, beträgt. Diese Ausgestaltung ist für das Wasserableitvermögen des Profils von Vorteil.

In diesem Zusammenhang ist es ferner günstig, wenn sich die verbleibenden Quernuten aus der Schulterblockreihe des Innenbereiches im Mittelbereich bzw. bis in diesen Bereich hinein, zumindest zum Teil, als Sacknuten, die deutlich kürzer als die Nuten sind, fortsetzen. Die Sacknuten enden dabei bevorzugt im Bereich der Äquatorlinie, was ebenfalls eine das Drainagevermögen unterstützende Maßnahme ist.

Um im Mittelbereich des Laufstreifenprofils eine für den Abrieb ungünstige Profilsteifigkeit zu vermeiden, werden, nach einem weiteren Merkmal der Erfindung, die Profilstrukturen im Mittelbereich durch weitere, schmal ausgeführte Rillen, die eine zu den Nuten gegensinnige Neigung aufweisen und mit geringerer Tiefe als diese ausgeführt sind, gegliedert.

Der Außenbereich wird so gestaltet, dass die der dort angeordneten Schulterblockreihe benachbarte Umfangsnut als schmale und in Umfangsrichtung gerade umlaufende Nuten ausgeführt ist.

Für ein gutes Ansprechen auf Lenkkräfte und das Fahrverhalten ist es ferner von Vorteil, wenn im Außenbereich zwischen den dem Mittelbereich und der Schulterblockreihe benachbarten Umfangsnuten zumindest ein Laufstreifenband angeordnet ist.

Im Innenbereich werden die den Mittelbereich und die die Schulterblockreihe begrenzenden Umfangsnuten bevorzugt als in Umfangsrichtung gerade umlaufende Nuten ausgeführt.

Bei breiter dimensionierten Reifen ist es von Vorteil, wenn zwischen der Schulterblockreihe des Innenbereiches und dem Mittelbereich eine weitere Blockreihe angeordnet wird. Diese Maßnahme gestattet eine Verbreiterung des Laufstreifenprofils unter Beibehaltung der erwünschten Profileigenschaften.

Ein gleichmäßiger Abrieb des Laufstreifenprofils wird ferner noch dadurch unterstützt, dass sich jede Quernut nach dem Durchgang durch eine Umfangsnut derart fortsetzt, dass sich eine Unterkante der Quernut aus einer weiter außen gelegenen Profilstruktur in eine Oberkante der Quernut, der Sacknut oder der Nut der benachbarten und weiter innen gelegenen Profilstruktur übergeht.

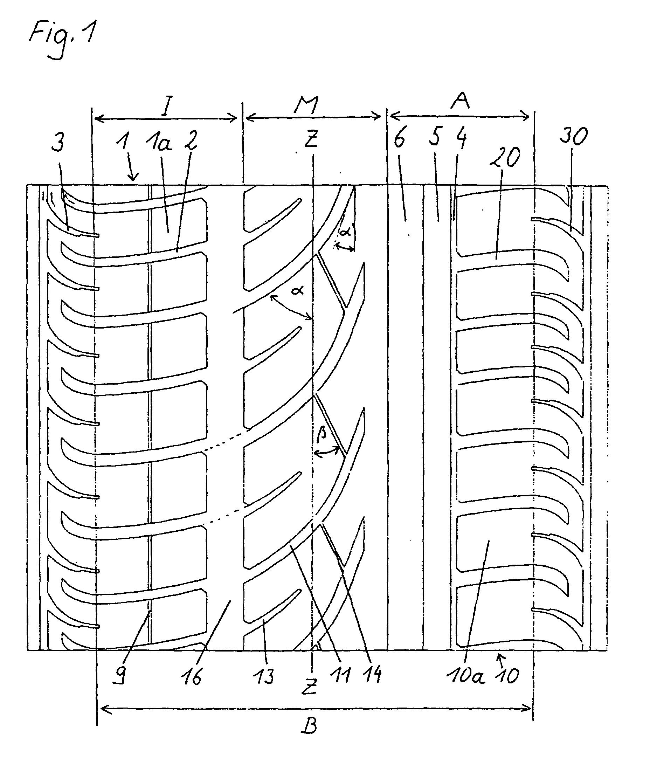

Weitere Merkmale, Vorteile und Einzelheiten der Erfindung werden nun anhand der Zeichnung, die drei Ausführungsbeispiele darstellt, näher beschrieben. Dabei zeigen die Fig. 1 bis 3 Teilabwicklungen von unterschiedlichen Ausführungsformen von erfindungsgemäß ausgeführten Laufstreifenprofilen für Fahrzeugluftreifen.

Sämtliche der dargestellten Ausführungsvarianten von Laufstreifenprofilen sind für PKW-Radialreifen, die bei höheren Geschwindigkeiten gefahren werden können und insbesondere als so genannte Sommerreifen geeignet sind, vorgesehen. Dabei handelt es sich bei erfindungsgemäß ausgeführten Laufstreifenprofilen grundsätzlich um bezüglich der Reifenäquatorebene asymmetrisch, hier jedoch nicht laufrichtungsgebunden ausgeführte Profile. Dabei sind unter asymmetrisch ausgeführten Profilen solche zu verstehen, bei denen sich in jener Laufstreifenhälfte, die bei montiertem Reifen der Außenseite des Fahrzeuges zugewandt ist, Profilstrukturen vorgesehen sind, die sich grundsätzlich von Profilstrukturen, die in der anderen Laufstreifenhälfte, die bei montiertem Reifen der Fahrzeuginnenseite zugewandt ist, angeordnet sind, unterscheiden. Bei den gegenständlichen Ausführungsvarianten besteht in den beiden Laufstreifenhälften lediglich Übereinstimmung hinsichtlich der Struktur der Schulterelemente des Profils.

In der nachfolgenden, ausführlichen Beschreibung werden die in den Zeichnungsfiguren dargestellten Laufstreifenprofile über ihre Breite B, die der Breite jenes Bereiches des Laufstreifenprofils entspricht, welcher beim Abrollen des Reifens mit dem Untergrund in Kontakt tritt (gemäß E.T.R.T.O. Standards), betrachtet. Aufgrund der Asymmetrie besitzen erfindungsgemäß ausgeführte Laufstreifenprofile jeweils einen dem Fahrzeug zugewandten Innenbereich I und einen der Fahrzeugaußenseite zuzuordnenden Außenbereich A. Im Laufstreifenmittelbereich M, der über die Äquatorebene verläuft, die in den Zeichnungsfiguren durch die Äquatorlinie Z-Z versinnbildlicht ist, sind erfindungsgemäß ausgeführte Laufstreifenprofile besonders gestaltet.

Bei dem in Fig. 1 dargestellten Ausführungsbeispiel eines erfindungsgemäß ausgeführten Laufstreifenprofils ist in den beiden Schulterbereichen jeweils eine Schulterblockreihe 1, 10 angeordnet. Beide Schulterblockreihen 1, 10 setzen sich über den Profilumfang aus Blöcken 1a, 10a zusammen, die dadurch entstehen, dass Quemuten 2, 20 vorgesehen sind, die hier leicht bogenförmig gekrümmt verlaufen, jedoch im Wesentlichen nur geringfügig von der exakten Querrichtung des Profils abweichen. Dabei ist die Bogenform der Quemuten 2 gegenüber jener der Quernuten 20, bezüglich der Umfangrichtung betrachtet, umgekehrt. Nuten 3, 30, die außerhalb des bodenberührenden Bereiches des Laufstreifenprofils beginnen und gerade noch in diesen Bereich hineinverlaufen, haben eine nur dekorative Funktion und sind auch nur in geringer Tiefe ausgeführt.

Die Schulterblöcke 10a der im Außenbereich A angeordneten Schulterblockreihe 10 sind laufstreifeninnenseitig von einer geraden, in Umfangsrichtung umlaufenden und relativ schmal ausgeführten Umfangsnut 4 begrenzt, in die somit auch die Quernuten 20 münden. Die Umfangsnut 4 wird insbesondere in einer Breite von 2 bis 3 mm ausgeführt und wird in eine Tiefe ausgeführt, die geringer als die sonstige Profiltiefe, die im Allgemeinen 8 mm beträgt, ist. Im Außenbereich A schließt an die Umfangsnut 4 ein weiters nicht strukturiertes bzw. im Wesentlichen nicht strukturiertes Laufstreifenband 5 an, welches eine Breite von etwa 7 bis 12 mm besitzt, und laufstreifeninnenseitig durch eine breite, insbesondere 8 bis 13 mm breite und gerade umlaufende, weitere Umfangsnut 6 begrenzt ist.

Die im Laufstreifeninnenbereich I angeordnete Schulterblockreihe 1 ist bei diesem Ausführungsbeispiel etwas breiter ausgeführt als die im Laufstreifenaußenbereich A verlaufende Schulterblockreihe 10. Ansonsten sind die beiden Schulterblockreihen 1, 10 im Wesentlichen hinsichtlich ihrer Struktur übereinstimmend ausgeführt, mit der weiteren Ausnahme, dass in der Schulterblockreihe 1 im Innenbereich I zusätzlich eine seichte, schmale Umfangsrille 9 vorgesehen ist, die die Schulterblöcke 1a etwa in ihrer Mitte bzw. im mittleren Bereich durchläuft und die im Wesentlichen dekorative Funktion hat. Auch im Innenbereich I ist die Schulterblockreihe 1 laufstreifeninnenseitig durch eine Umfangsnut 6 begrenzt, in welche die Quernuten 2 einmünden. Die Umfangsnut 6 ist eine gerade umlaufende und breit ausgeführte Umfangsnut, deren Breite im Wesentlichen der Breite der Umfangsnut 6 im Außenbereich A entspricht. An die Umfangsnut 6 schließt der bereits erwähnte Mittelbereich M des Laufstreifenprofils an, auf dessen Ausgestaltung nun näher eingegangen wird.

Im Mittelbereich M des Laufstreifenprofiles setzen sich die Quernuten 2 aus den Schulterblockreihen 1 fort. Der Mittelbereich M besitzt nun ebenfalls eine blockreihenähnliche Struktur, die dadurch entsteht, dass jede zweite Quernut 2 aus der Schulterblockreihe 1 im Mittelbereich M als diesen nahezu komplett durchquerende Quernut 11 fortgesetzt wird. Die Quernuten 11 enden in einem Abstand, der kleiner als 10%, insbesondere < 5%, der Laufstreifenbreite B ist, vor der breiten Umfangsnut 6. Im Bereich der Umfangsnut 16 mit einem Neigungswinkel α von 30 bis 65°, insbesondere 40 bis 50°, relativ zur Äquatorlinie Z-Z beginnend verlaufen die Nuten 11 in Richtung zur Umfangsnut 8 mit einem relativ zur Umfangsrichtung kleiner werdenden Winkel, bis schließlich an ihren Endbereichen ein Winkel α' vorliegt, der zwischen 10 und 30°, insbesondere etwa 20°, beträgt. Diese Ausgestaltung bzw. dieser Verlauf der Nuten 11 ist für das Drainagevermögen und somit für das Aquaplaningverhalten des Reifens von Vorteil. Die Nuten 11 sind daher auch zumindest im Wesentlichen in der Breite der Quernuten 2 ausgeführt.

Auch die weiteren Quernuten 2 aus der Schulterblockreihe 1 finden, wie bereits erwähnt, eine Fortsetzung im Mittelbereich M und zwar als Sacknuten 13, die knapp vor bzw. im Bereich der Äquatorlinie Z-Z enden und zu ihren Enden zu schmäler werden. Die Sacknuten 13 verlaufen etwa in der Mitte von in Umfangsrichtung benachbarten Nuten 11. Ihr Verlauf stimmt zumindest im Wesentlichen mit dem Verlauf der Nuten 11 überein. Diese Ausgestaltung des Mittelbereiches M gestattet eine Fortführung der Anzahl von Quernuten 2 aus der Schulterblockreihe, ohne dass die Profilstrukturen im Mittelbereich M zu schmal würden, was der Fall wäre, wenn bei der beschriebenen Winkelung sämtliche Quernuten 2 aus der Schulterblockreihe 1 wie die Nuten 11 fortgesetzt würden. Durch die Ausgestaltung des Mittelbereiches M ist daher sichergestellt, dass es beim Abrollen des Reifens zu keinen abrupten Aufschlägen im Einlauf und zu keinen unerwünschten Schwingungen im Auslauf kommt. Durch die erfindungsgemäße Ausgestaltung bildet sich das Abrollgeräusch derart aus, dass im Mittelbereich M durch die verbleibenden Restimpulse nur Frequenzen mit halber Tonhöhe im Vergleich zu den Impulsen aus der Schulter erzeugt werden, was eine für das menschliche Hörempfinden angenehme Mischfrequenz zur Folge hat.

Der Mittelbereich M besitzt eine Breite, die beim gegenständlichen Ausführungsbeispiel etwa 25 % der Laufstreifenbreite B trägt. Dabei kann die Breite des Mittelbereiches M bei-erfindungsgemäß ausgeführten Laufstreifenprofilen zwischen 20 und 35 % der Laufstreifenbreite B betragen.

Im Mittelbereich M ist es ferner von Bedeutung, dass die dort vorgesehenen Profilstrukturen weder zu steif noch zu stark beweglich sind. Beides hätte nachteilige Folgen für den Laufstreifenabrieb. Es ist daher eine weitere Gliederung des Mittelbereiches M zur Erhöhung der Beweglichkeit von Vorteil. Aus diesem Grund sind weitere Rillen 14 vorgesehen, die gegensinnig zu den Nuten 11 und jeweils zwischen benachbarten Nuten 11 verlaufen und einen Winkel β mit der Äquatorlinie Z-Z in der Größenordnung von 10 bis 30° einschließen. Die Rillen 14 werden dabei relativ schmal, insbesonders in einer Breite von 1 bis 2,5 mm, ausgeführt und reichen insbesondere auch nicht auf die volle Profiltiefe sondern etwa auf halbe Profiltiefe. Ihre Anordnung innerhalb des Mittelbereiches M wird femer so gewählt, dass durch sie und die Sacknuten 13 Blockbereiche entstehen, die etwa übereinstimmende Beweglichkeit besitzen.

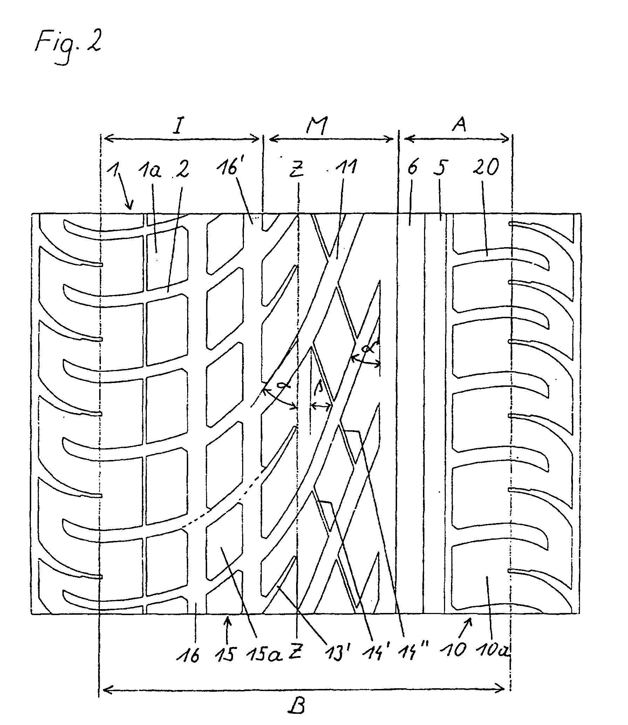

Die in Fig. 2 dargestellte Ausführungsvariante eines erfindungsgemäßen Laufstreifenprofils unterscheidet sich von jener gemäß Fig. 1 im Wesentlichen durch die Ausgestaltung des Innenbereiches I und des Mittelbereiches M. Die im Folgenden noch näher zu beschreibenden Unterschiede ergeben sich insbesondere aus einer Verbreiterung des Laufstreifenprofils für Reifen größerer Dimensionen und größerer Geschwindigkeiten. Das Laufstreifenprofil gemäß Fig. 2 besitzt daher ebenfalls einen Außenbereich A mit einer Schulterblockreihe 10 mit Schulterblöcken 10a und Quernuten 20, ein Laufstreifenband 5 und eine breite Umfangsnut 6.

Im Innenbereich I des Laufstreifenprofiles ist neben der Schulterblockreihe 1 mit Schulterblöcken 1a und der diese laufstreifeninnenseitig begrenzenden Nut 6 an diese zur Laufstreifenmitte anschließend eine gesonderte Blockreihe 15 mit etwa rhombenförmigen Blöcken 15a vorgesehen, indem sich die Quernuten 2 aus den Schulterblockreihen 1 als Quernuten 2' fortsetzen und in eine weitere, breite und gerade in Umfangsrichtung verlaufende Umfangsnut 16' münden. Von hier ausgehend schließt der Mittelbereich M des Laufstreifenprofiles an, wo jede zweite Quernut 2' als Sacknut 13' fortgesetzt ist, die analog zum Ausführungsbeispiel gemäß Fig. 1 im Bereich bzw. knapp vor der Äquatorlinie Z-Z endet. Die weiteren Quernuten 2' setzen sich im Mittelbereich M als Nuten 11' fort, die erst knapp vor der Umfangsnut 6 enden und die im Bereich ihrer Einmündungen zur Umfangsnut 16' einen Winkel α, der zwischen 30° und 65° gewählt wird, und hier etwa 35 ° beträgt, einschließen. Auch bei dieser Ausführungsform werden die Nuten 11' über ihren weiteren Verlauf steiler und schließen über einen größeren Teil ihrer Erstreckung einen Winkel α' von 10° bis 30°, hier etwa 20 °, mit der Äquatorlinie Z-Z und damit mit der Umfangsrichtung ein. Der Mittelbereich M nimmt bei diesem Ausführungsbeispiel rund 27 % der Laufstreifenbreite B ein und ist hier so angeordnet, dass rund 60 % seiner Breite in jener Laufstreifenhälfte verläuft, in der der Außenbereich A liegt. Auch bei diesem Ausführungsbeispiel werden durch die Nuten 11' langgestreckte blockähnliche Strukturen im Mittelbereich M geschaffen, denen durch zusätzliche Rillen 14',14", die analog zu den Rillen 14 des Ausführungsbeispieles gemäß Fig. 1 ausgeführt sind, die erforderliche Beweglichkeit verliehen wird. Jede blockähnliche Struktur ist somit über ihre Erstreckung quasi viergeteilt. Die Teilung ist so getroffen, dass Bereiche mit in etwa übereinstimmender Beweglichkeit entstehen.

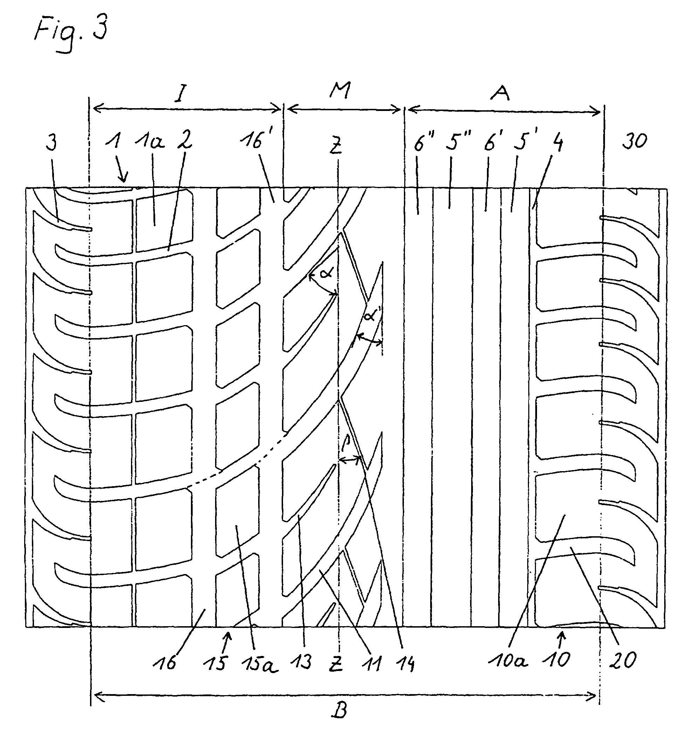

Beim Ausführungsbeispiel gemäß Fig. 3 entspricht die Ausgestaltung des Innenbereiches I des Laufstreifenprofils jenem in Fig. 2 dargestellten. Auch hier sind neben der Schulterblockreihe 1 mit Blöcken 1a und Quernuten 2 und einer Umfangsnut 6 eine weitere zusätzliche Blockreihe 15 mit Blöcken 15a und eine Umfangsnut 16' vorgesehen.

Der Mittelbereich M des in Fig. 3 dargestellten Ausführungsbeispieles entspricht von seiner Ausgestaltung und Anordnung her jenem gemäß Fig. 1. Der Mittelbereich M umfasst daher durch Nuten 11 gebildete blockähnliche Strukturen, Sacknuten 13 und zusätzliche Rillen 14, die aus Gründen der Beweglichkeit des Mittelbereiches vorgesehen werden.

Im Außenbereich A des Laufstreifens schließt nun an die die Schulterblockreihe 10 begrenzende, schmale Umfangsnut 4 ein erstes Laufstreifenband 5', an dieses schließen eine breite Umfangsnut 6', an diese zur Laufstreifenmitte zu ein weiteres, etwas breiteres Laufstreifenband 5" und eine zweite breite Umfangsnut 6" an. Diese zusätzlichen Profilstrukturen, ein zweites Laufstreifenband und eine weitere breite Umfangsnut mehr als im Ausführungsbeispiel gemäß Fig. 1, bewirken auch hier eine entsprechende Verbreiterung des Laufstreifens für Reifen entsprechender Dimensionen.

Die Fortsetzung der Quernuten 2, 2' in die jeweils benachbarten Profilstrukturen im Mittelbereich M bzw. der zusätzlichen Blockreihe 15 erfolgt unter einem kleinen Versatz in Umfangsrichtung, welcher dadurch gebildet wird, dass sich jede Quernut 2, 2' beim "Durchgang" durch die Umfangsnuten 6, 16' so fortsetzt, dass von einer weiter außen gelegenen Profilstruktur zu einer weiter innen gelegenen Profilstruktur die Unterkante einer Quemut 2, 2' in der Oberkante der benachbarten Quemut 2', Sacknut 13, 13' oder Nut 11, 11' ihre "Fortsetzung" findet. Wie sich herausgestellt hat, hat diese Maßnahme günstige Auswirkungen auf einen gleichmäßigen Abrieb des Laufstreifens. In sämtlichen Zeichnungsfiguren ist diese Ausgestaltung durch strichlierte Linien, die die Umfangsnuten 6, 16' queren, verdeutlicht.

Erwähnt sei ferner, dass insbesondere die spitzwinkeligen Eckbereiche der Blöcke bzw. blockähnliche Strukturen des Laufstreifenprofils mit Abschrägungen versehen werden. Auch dies ist eine Maßnahme die aus Gründen eines gleichmäßigen Abriebs und zur Vermeidung von Rissbildungen getroffen wird.

Abweichend von den dargestellten Ausführungsformen kann bei erfindungsgemäß ausgeführten Laufstreifenprofilen von den Quernuten aus der Schulterblockreihe im Innenbereich nur jede dritte oder jede vierte im Mittelbereich als diesen nahezu durchquerende Nuten fortgesetzt werden. Die verbleibenden Quernuten werden zumindest teilweise in den Mittelbereich als kürzere Sacknuten fortgesetzt.

Es ist ferner grundsätzlich möglich, bei erfindungsgemäß ausgeführten Laufstreifenprofilen im Mittelbereich die Nuten 11, 11' als den Mittelbereich komplett durchsetzende Nuten auszuführen, so dass sie in eine Umfangsnut des Außenbereiches münden. Dabei ist darauf zu achten, dass die Steifigkeit des Profils im Mittelbereich nicht zu gering wird.

## Patentansprüche

1. Fahrzeugluftreifen mit einem bezüglich des Umfanges der Lauffläche asymmetrisch gestalteten Laufstreifenprofil, welches somit fahrzeugbezogen einen Außen- und einen Innenbereich, jeweils mit einer Schulterblockreihe, und einen Mittelbereich aufweist, welcher durch zum Außen- bzw. Innenbereich gehörende Umfangsnuten seitlich begrenzt ist, wobei sich Quernuten aus der Schulterblockreihe des Innenbereiches bis in den Mittelbereich fortsetzen, **dadurch gekennzeichnet, dass** der Mittelbereich (M) des Laufstreifenprofiles eine Breite von 25 bis 35 % der Laufstreifenbreite (B) aufweist, wobei sich höchstens jede zweite Quernut (2) aus der Schulterblockreihe (1) des Innenbereiches (I) im Mittelbereich (M) als diesen zumindest nahezu durchquerende Nut (11, 11') fortsetzt, wobei diese Nuten (11, 11') im Mittelbereich (M) über zumindest ein Drittel ihrer Längserstreckung einen Winkel (α) von höchstens 30° mit der Äquatorlinie einschließen, **dadurch gekennzeichnet, dass** die Nuten (11,11') des Mittelbereiches (M) in einem Abstand, welcher höchstens 10 % der Laufstreifenbreite (B), insbesondere höchstens 5% der Laufstreifenbreite (B), beträgt, vor der den Mittelbereich (M) begrenzenden Umfangsnut (6,6') des Außenbereiches (A) enden.

2. Fahrzeugluftreifen nach Anspruch 1, **dadurch gekennzeichnet, dass** sich nur jede dritte oder vierte Quernut (2) aus der Schulterblockreihe (1) des Innenbereiches (I) im Mittelbereich (M) als diesen zumindest nahezu durchquerende Nut (11, 11') fortsetzt.

3. Fahrzeugluftreifen nach Anspruch 1 oder 2, **dadurch gekennzeichnet, dass** die Nuten (11, 11') an ihren beim Außenbereich liegenden Endbereichen einen Winkel (α') ≤ 20° mit der Äquatorlinie (Z-Z) einschließen.

4. Fahrzeugluftreifen nach einem der Ansprüche 1 bis 3, **dadurch gekennzeichnet, dass** die Nuten (11, 11') an ihren jeweiligen Einmündungsbereichen in die Umfangsnut (6, 6') des Innenbereiches (I) mit der Äquatorlinie (Z-Z) einen Winkel (α) einschließen, der zwischen 30 und 65°, insbesondere höchstens 50°, beträgt.

5. Fahrzeugluftreifen nach einem der Ansprüche 1 bis 4, **dadurch gekennzeichnet, dass** sich die verbleibenden Quernuten (2) aus der Schulterblockreihe (1) des Innenbereiches (I) im Mittelbereich (M) bzw. bis in diesen Bereich hinein zumindest zum Teil als Sacknuten (13, 13'), die deutlich kürzer als die Nuten (11,11') sind, fortsetzen.

6. Fahrzeugluftreifen nach Anspruch 5, **dadurch gekennzeichnet, dass** die Sacknuten (13, 13') im Bereich der Äquatorlinie (Z-Z) enden.

7. Fahrzeugluftreifen nach einem der Ansprüche 1 bis 6, **dadurch gekennzeichnet, dass** die Profilstrukturen im Mittelbereich (M) durch weitere, schmal ausgeführte Rillen (14, 14', 14"), die eine zu den Nuten (11, 11') gegensinnige Neigung aufweisen und mit geringerer Tiefe als diese ausgeführt sind, gegliedert sind.

8. Fahrzeugluftreifen nach einem der Ansprüche 1 bis 7, **dadurch gekennzeichnet, dass** im Außenbereich (A) die der dort angeordneten Schulterblockreihe (10) benachbarte Umfangsnut (4) als schmale und in Umfangsrichtung gerade umlaufende Nut ausgeführt ist.

9. Fahrzeugluftreifen nach einem der Ansprüche 1 bis 8, **dadurch gekennzeichnet, dass** zwischen den dem Mittelbereich (M) und der Schulterblockreihe (20) benachbarten Umfangsnuten (6, 6", 4) zumindest ein Laufstreifenband (5, 5', 5") angeordnet ist.

10. Fahrzeugluftreifen nach einem der Ansprüche 1 bis 9, **dadurch gekennzeichnet, dass** im Innenbereich (I) sowohl die den Mittelbereich (M) als auch die die Schulterblockreihe (1) begrenzende Umfangsnut (6, 6') als breite und in Umfangsrichtung gerade umlaufende Nuten ausgeführt sind.

11. Fahrzeugluftreifen nach einem der Ansprüche 1 bis 10, **dadurch gekennzeichnet, dass** zwischen der Schulterblockreihe (1) des Innenbereiches (I) und dem Mittelbereich (M) eine weitere Blockreihe (15) angeordnet ist.

12. Fahrzeugluftreifen nach einem der Ansprüche 1 bis 11, **dadurch gekennzeichnet, dass** sich jede Quernut (2) beim "Durchgang" durch eine Umfangsnut (16, 16') derart fortsetzt, dass sich eine Unterkante der Quernut (2, 2') aus einer weiter außen gelegenen Profilstruktur in einer Oberkante der Quernut, der Sacknut (13, 13') oder der Nut (11, 11') der benachbarten und weiter innen gelegenen Profilstruktur fortsetzt.

## Claims

1. Pneumatic vehicle tyre having a tread strip profile designed asymmetric in relation to the circumference of the running surface, said profile thus having, relative to the vehicle, an outside region and an inside region, each having a shoulder block row, and a centre region which is laterally delimited by circumferential grooves belonging to the outside or inside regions respectively, transverse grooves of the shoulder block row of the inside region continuing into the centre region, **characterised in that** the centre region (M) of the tread strip profile has a width of 25 to 35% of the tread strip width (B), at least every second transverse groove (2) of the shoulder block row (1) of the inside region (I) continuing in the centre region as a groove (11,11') which at least almost traverses the latter, these grooves (11, 11') enclosing an angle (α) of at least 30° with the equator line in the centre region (M) over at least a third of their longitudinal extension, **characterised in that** the grooves (11, 11') of the centre region (M) terminate at a spacing, which is at the most 10% of the tread strip width (B), more especially at most 5% of the tread strip width (B), before the circumferential groove (6, 6') of the outside region (A), which groove delimits the centre region (M).

2. Pneumatic vehicle tyre according to claim 1, **characterised in that** only every third or fourth transverse groove (2) of the shoulder block row (1) of the inside region (I) continues in the centre region (M) as a groove (11, 11') which at least almost traverses the latter.

3. Pneumatic vehicle tyre according to claim 1 or 2, **characterised in that** the grooves (11, 11') enclose an angle (α')≤20° with the equator line (Z-Z) at their end regions which lie at the outside region of the tyre.

4. Pneumatic vehicle tyre according to one of claims 1 to 3, **characterised in that** the grooves (11, 11') enclose an angle (α), which is between 30 and 65°, more especially at the most 50°, with the equator line (Z-Z) at their respective regions opening out into the circumferential groove (6, 6') of the inside region (I) of the tyre.

5. Pneumatic vehicle tyre according to one of claims 1 to 4, **characterised in that** the remaining transverse grooves (2) of the shoulder block row (1) of the inside region (I) continue in the centre region (M), or respectively into this region, at least partially as blind grooves (13, 13') which are significantly shorter than grooves (11, 11').

6. Pneumatic vehicle tyre according to claim 5, **characterised in that** the blind grooves (13, 13') terminate in the region of the equator line (Z-Z).

7. Pneumatic vehicle tyre according to one of claims 1 to 6, **characterised in that** that the profile structures in the centre region (M) are divided by additional narrow grooves (14, 14', 14") which have an opposite inclination to grooves (11, 11') and are less deep than the latter.

8. Pneumatic vehicle tyre according to one of claims 1 to 7, **characterised in that** in the outside region (A), the circumferential groove (4), which is adjacent to the shoulder block row (10) arranged there, is designed as a narrow groove which extends straight in the circumferential direction.

9. Pneumatic vehicle tyre according to one of claims 1 to 8, **characterised in that** at least one tread strip band (5, 5', 5") is disposed between the circumferential grooves (6, 6", 4) which are adjacent to the centre region (M) and the shoulder block row (20).

10. Pneumatic vehicle tyre according to one of claims 1 to 9, **characterised in that,** in the inside region (I), both the circumferential groove (6, 6') delimiting the centre region (M) and that delimiting the shoulder block row (1) are realised as wide grooves which extend straight in the circumferential direction.

11. Pneumatic vehicle tyre according to one of claims 1 to 10, **characterised in that** an additional row of blocks (15) is disposed between the shoulder block row (1) of the inside region (I) and the centre region (M).

12. Pneumatic vehicle tyre according to one of claims 1 to 11, **characterised in that** each transverse groove (2), when "passing through" a circumferential groove (16, 16'), is continued in such a way that a lower edge of the transverse groove (2, 2') of a profile structure lying further to the outside continues in an upper edge of the transverse groove, the blind groove (13, 13') or the groove (11, 11') of the adjacent profile structure lying further to the inside.

## Revendications

1. Pneumatique de véhicule comprenant une sculpture de bande de roulement configurée de façon asymétrique par rapport à la circonférence de la surface de roulement, laquelle sculpture de bande de roulement présente ainsi, par rapport au véhicule, une zone extérieure et une zone intérieure comprenant à chaque fois une rangée de blocs à épaulement, et une zone centrale qui est limitée latéralement par des rainures circonférentielles faisant partie de la zone extérieure ou de la zone intérieure, où des rainures transversales se continuent à partir de la rangée de blocs à épaulement de la zone intérieure jusqu'à la zone centrale,
**caractérisé en ce que** la zone centrale (M) de la sculpture de la bande de roulement présente une largeur de 25 % à 35 % par rapport à la largeur (B) de la bande de roulement, où au maximum chaque deuxième rainure transversale (2), à partir de la rangée de blocs à épaulement (1) de la zone intérieure (I), se continue dans la zone centrale (M) comme rainure (11, 11') traversant au moins presque cette zone centrale, où ces rainures (11, 11'), dans la zone centrale (M), sur au moins un tiers de leur dimension longitudinale, forment avec la ligne équatoriale, un angle (α) au maximum de 30°,
**caractérisé en ce que** les rainures (11, 11') de la zone centrale (M), suivant un intervalle qui est égal au maximum à 10 % de la largeur (B) de la bande de roulement, en particulier égal au maximum à 5 % de la largeur (B) de la bande de roulement, se terminent avant la rainure circonférentielle (6, 6') de la zone extérieure (A), limitant la zone centrale (M).

2. Pneumatique de véhicule selon la revendication 1, **caractérisé en ce que** seulement chaque troisième ou quatrième rainure transversale (2), à partir de la rangée de blocs à épaulement (1) de la zone intérieure (I), se continue dans la zone centrale (M) comme rainure (11, 11') traversant au moins presque cette zone centrale.

3. Pneumatique de véhicule selon la revendication 1 ou 2, **caractérisé en ce que** les rainures (11, 11'), au niveau de leurs zones d'extrémités se trouvant dans la zone extérieure, forment avec la ligne équatoriale (Z-Z), un angle (α') inférieur ou égal à 20°.

4. Pneumatique de véhicule selon l'une quelconque des revendications 1 à 3, **caractérisé en ce que** les rainures (11, 11'), au niveau de leurs zones respectives de jonction dans la rainure circonférentielle (6, 6') de la zone intérieure (I), forment avec la ligne équatoriale (Z-Z), un angle (α) qui varie entre 30° et 65°, en particulier égal au maximum à 50°.

5. Pneumatique de véhicule selon l'une quelconque des revendications 1 à 4, **caractérisé en ce que** les rainures transversales (2) qui subsistent, à partir de la rangée de blocs à épaulement (1) de la zone intérieure (I), se continuent dans la zone centrale (M) ou jusque dans cette zone, au moins en partie comme des rainures non débouchantes (13, 13') qui sont nettement plus courtes que les rainures (11, 11').

6. Pneumatique de véhicule selon la revendication 5, **caractérisé en ce que** les rainures non débouchantes (13, 13') se terminent dans la zone de la ligne équatoriale (Z-Z).

7. Pneumatique de véhicule selon l'une quelconque des revendications 1 à 6, **caractérisé en ce que** les structures de sculpture, dans la zone centrale (M), sont subdivisées en d'autres rayures (14, 14', 14"), réalisées de façon étroite, qui présentent une inclinaison de sens opposé par rapport aux rainures (11, 11') et sont réalisées en ayant une profondeur moins importante que ces rainures.

8. Pneumatique de véhicule selon l'une quelconque des revendications 1 à 7, **caractérisé en ce que**, dans la zone extérieure (A), la rainure circonférentielle (4) voisine de la rangée de blocs à épaulement (10) disposée dans cette zone est réalisée comme une rainure étroite et, dans la direction circonférentielle, comme une rainure circulaire et rectiligne.

9. Pneumatique de véhicule selon l'une quelconque des revendications 1 à 8, **caractérisé en ce qu'**au moins un bandage de bande de roulement (5, 5', 5") est disposé entre les rainures circonférentielles (6, 6", 4) voisines de la zone centrale (M) et de la rangée de blocs à épaulement (20).

10. Pneumatique de véhicule selon l'une quelconque des revendications 1 à 9, **caractérisé en ce que**, dans la zone intérieure (I), aussi bien la rainure circonférentielle (6) limitant la zone centrale (M) que la rainure circonférentielle (6') limitant la rangée de blocs à épaulement (1) sont réalisées comme des rainures larges et, dans la direction circonférentielle, comme des rainures circulaires et rectilignes.

11. Pneumatique de véhicule selon l'une quelconque des revendications 1 à 10, **caractérisé en ce qu'**une autre rangée de blocs (15) est disposée entre la rangée de blocs à épaulement (1) de la zone intérieure (I) et la zone centrale (M).

12. Pneumatique de véhicule selon l'une quelconque des revendications 1 à 11, **caractérisé en ce que** chaque rainure transversale (2), lors du "passage" à travers une rainure circonférentielle (16, 16'), se continue de manière telle, qu'un bord inférieur de la rainure transversale (2, 2') se continue à partir d'une structure de sculpture placée plus à l'extérieur, jusqu'à un bord supérieur de la rainure transversale, de la rainure non débouchante (13, 13') ou de la rainure (11, 11') de la structure de sculpture voisine et placée plus à l'intérieur.
